# EUROPEAN PATENT APPLICATION

(11) **EP 2 341 380 A2**
(43) Date of publication of application: **06.07.2011**
(21) Application number: 10368005.4
(22) Date of filing: 19.01.2010
(51) Int. Cl.: G02B 7/08, G02B 13/00

(54) **Twin-actuator configuration for a camera module**

(30) Priority: 15.12.2009 EP 09368050
(71) Applicant: Dialog Imaging Systems GmbH, 73230 Kirchheim/Teck-Nabern (DE)
(72) Inventor: Schworm, Ernst, 80538 Munich (DE); Bartenschlager, Gabriel, 73230 Kichheim (Teck) (DE)
(74) Representative: Schuffenecker, Thierry

(57) **Abstract**

Systems and methods for camera modules having a movable lens barrel, allowing a maximum lens diameter with minimal outside dimensions are disclosed. At least two actuators are moving the lens barrel. Each actuator is deployed in a separate corner of the camera module. In a first embodiment of the invention two actuators are deployed on a same side of the camera module having ball bearings between them. ln a second embodiment two actuators are diagonally deployed having guiding rods deployed on the other corners of the camera module.

## Description

This application is related to the following European patent applications:
D108-006, titled "Camera Shutter and position control thereof", and
D109-003/004, titled "Camera Module having a low-friction movable lens",

Both being filed on 19. January 2010 by the Applicant of the present application and being incorporated by reference into this application.

### Technical field

This invention relates generally to camera modules and relates more specifically to camera modules having a movable lens barrel and wherein the actuators are deployed in a way to achieve minimal size of the camera module.

### Background Art

Digital camera modules are used with many electronic devices such as e.g. mobile phones, personal data assistants (PDAs), computers, etc. These camera modules have to be as small as possible, reliable and easy to be used, robust and require minimal power consumption. Furthermore the design of the camera modules should allow low manufacturing cost, while the quality of the images has to conform to a high standard.

Therefore modem camera modules should allow auto-focusing and minimal friction of the bearing for a movable lens barrel in order to achieve precise focusing of the camera.

It is important that the camera modules, which are to be built in mobile electronic devices as e.g. mobile phones require minimal size. It is a challenge for the designers of camera modules to develop auto-focus camera modules using one or more actuators to move a lens barrel having minimal size.

There are known patents or patent publications dealing with the design of camera modules.

U. S. Patent Publication(US 2008/0037143 to Yoon) teaches a lens assembly has a driving actuator that includes a magnet, a yoke and a coil and is formed along a lens barrel that accommodates a lens unit for focusing and an auto-focus controlling apparatus comprises the lens assembly for camera module. The magnet or the coil has an internal diameter smaller than a maximal diameter of the lens barrel. Therefore, it is possible to manufacture much smaller lens assembly according to the present invention compared to the conventional ones and to reduce the possibility of component damages in the lens assembly in operating the camera module. A magnet, a yoke and a coil are arranged adjacently to or along the outside of the lens barrel. Besides, leaf springs are formed respectively on the top of the lens barrel and the beneath the lens barrel. The leaf springs interconnect the lens barrel, which moves repeatedly up and down, with the magnet, yoke, and coil fixed to the lens barrel so that they function as supplying currents with both ends of the coil. The lens barrel and a driving actuator including the magnet, the yoke, and the coil for operating the lens barrel are accommodated in a housing through threaded couplings.

U. S. Patent Publication(US 2007/0097218 to Chen) discloses a digital camera module including a lens module, an image sensor and a linear voice coil actuator. The lens module further includes a lens set, an infrared cut filter, a spacer set and a barrel. The image sensor is a CCD or a CMOS. The linear voice coil actuator includes an elongated soft magnetic core, a tubular permanent magnet positioned parallel to the axis of the core, a sliding holder and a coil attached to the sliding holder and positioned to interact with the permanent magnet along the axis of the core. The digital camera module further includes a servo-controller for controlling the movement of the linear voice coil actuator. An image sensor is attached to the driving portion of the sliding holder of the linear voice coil actuator and is arranged in the tubular permanent magnet.

U. S. Patent (US 7,499,095 to Kwon et al.) describes an apparatus and method for auto-focusing in a mobile terminal having a camera module which can automatically photograph an image in optimum focus when the camera function is used are provided. The apparatus and method comprise detecting the subject by performing a preview mode in a camera mode; detecting and storing a focus value while moving the lens by increasing/decreasing electrical current in stages based on a focus characteristic of the detected subject, determining based on a presently-detected focus value and a previously-stored focus value if a slope has changed, and detecting an optimum focus value from a focus value at which the slope has changed; and performing a tracking mode to track a focus in a predetermined zone which includes the detected focus value at a center of the zone. Therefore, the value of electrical current, which is applied to the camera module including the lens that moves to perform the auto-focusing for photographing an image in optimum focus, is controlled according to a distance between a subject and a lens so that the occurrence of unwanted sound caused by motion of the lens can be prevented. Specifically, according to a lens-moving unit according to an embodiment of the present invention, an electrical current flows along a conducting wire wound around a cylindrical form by a predetermined number of turns, so that a magnetic field is generated along one direction according to an induced current by the right-hand rule.

### Summary of the invention

A principal object of the present invention is to achieve methods and systems to achieve camera modules having a movable lens barrel, allowing a maximum lens diameter with minimal outside dimensions

A further object of the present invention is to use at least two actuators to move the lens barrel.

A further object of the present invention is to deploy each actuator in a separate corner of the camera module.

**ln** accordance with the objects of this invention a method for camera modules having a movable lens barrel allowing a maximum lens diameter with minimal outside dimensions has been achieved. The method invented comprises the following steps of (1) providing a camera module a camera module comprising a movable lens barrel and at least two actuators to move the lens barrel, and (2) deploying each actuators in a separate corner of the camera module.

ln accordance with the objects of this invention a camera module having a movable lens barrel, allowing a maximum lens diameter with minimal outside dimensions has been achieved. The camera module invented comprises, firstly, an image sensor, a shutter with an aperture function driven by a linear motor, and said motor driving the shutter, wherein the motor has an integrated position sensing system. Furthermore the camera module comprises a movable lens barrel, at least two actuators to move said lens barrel, wherein each actuator is deployed in a separate corner of the camera module, an integrated circuit controlling the motor driving the shutter and the actuators moving the lens barrel, and a means to guide the movements of the lens barrel.

ln accordance with the objects of this invention a camera module having a movable lens barrel, allowing a maximum lens diameter with minimal outside dimensions has been achieved. The camera module invented comprises a movable lens barrel, at least two actuators to move said lens barrel, wherein each actuator is deployed in a separate corner of the camera module, and a means to guide the movements of the lens barrel.

### Description of the drawings

In the accompanying drawings forming a material part of this description, there is shown:
**Figs. 1a** **c** show different views of a camera module using ball bearings according to the present invention.
**Fig. 2a** shows a more detailed top view of the first embodiment of the present invention
**Fig. 2b** shows a side view of the first embodiment of the present invention.
**Fig. 3a** shows an assembled camera module with a movable lens barrel, fixed parts, guiding rods, being diagonally deployed, and two bidirectional actuators comprising coils, which are firmly connected to fixed parts of the camera module, and magnets, which are firmly connected to the movable lens barrel.
**Fig. 3b** shows fixed parts with diagonally located guiding rods, springs and diagonally deployed actuator coils.
**Fig. 3c** shows the movable lens barrel with magnets, which can move inside the coils depending upon the currents through the coils.
**Fig. 4** illustrates a flowchart of a method invented for camera modules having a movable lens barrel, allowing a maximum lens diameter with minimal outside dimensions.

### Description of the preferred embodiment

The preferred embodiments disclose methods and systems to design camera modules having a movable lens barrel and allowing a maximum lens diameter with minimal outside dimensions.

Preferred embodiments of the invention are characterized by using more than one actuator to move a lens barrel. In the preferred embodiments of the invention actuators with integrated position detection are used to drive the movable lens barrel and to control an actual position of the lens barrel, e.g. as disclosed in the European patent application entitled "Camera Shutter and position control thereof" filed on January 19, 2010 by the Applicant of the present application. Other motors having a position control could be used as well.

All embodiments of the present invention achieve minimal outer dimensions by using more than one actuator to move the lens barrel and have these actuators deployed in a corner of the camera module. The actuators can be built smaller if more than one actuator is used.

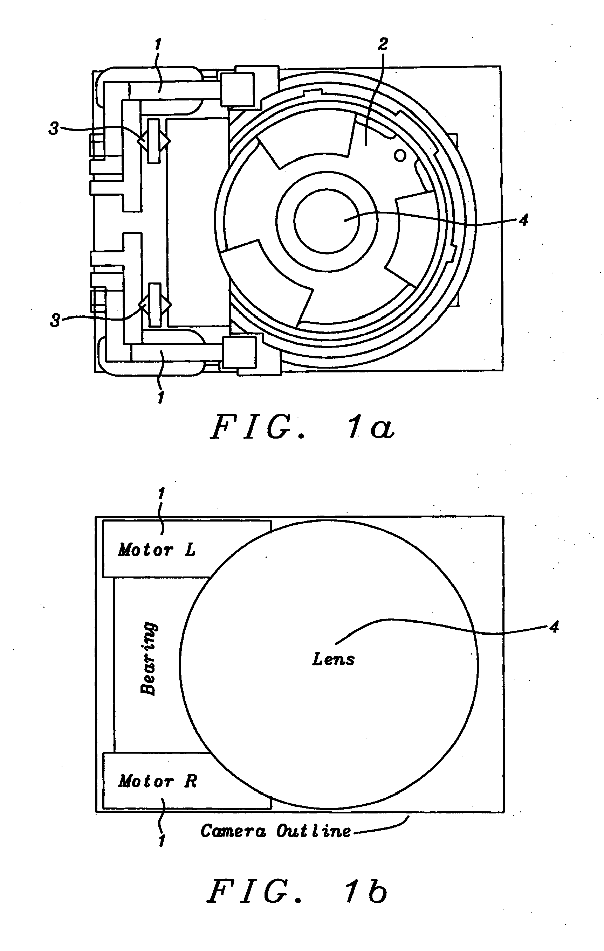

In a first preferred embodiment, the invention has been used with a camera module using ball bearings as shown in **Figs. 1** **a.b.**

**Fig. 1a** shows a top view of the first embodiment of the present invention. It shows two identical actuators **1**. Identical actuators are preferable but they could be of different types as long as they have a same torque. Furthermore it shows a movable lens barrel **2**, which is moved by the two actuators **1** and guided by two ball bearings **3** to achieve minimal friction of the movement of the lens barrel and a carrier **5.** The lens barrel **2** is moving up and down with respect to the carrier **5**. The ball bearing system **3** is guiding the lens barrel **2** containing the lens **4**. The twin actuators **1** can be smaller of size than a single actuator and fit into the corners of the camera module with minimum extra space requirement because the lens and lens barrel are round and the camera module is rectangular.

**Fig. 1b** shows key points of the first embodiment of the present invention.
The right and left motors/actuators **1** are deployed in the corners on the same side as the ball bearings, thus minimizing the space requirements.

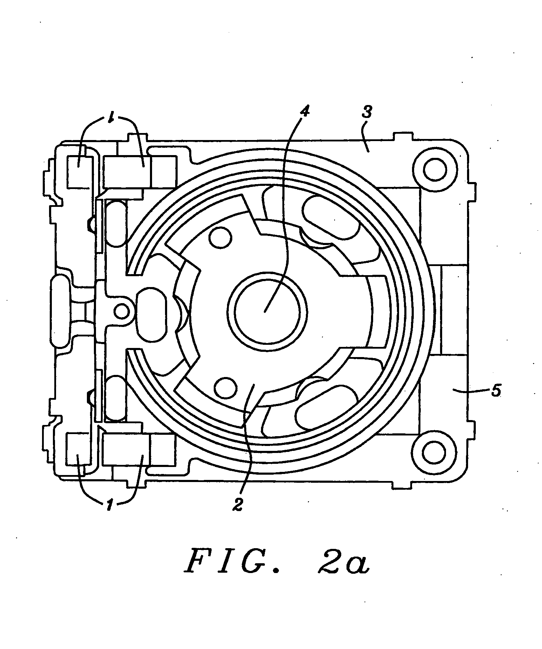

**Fig. 2a** shows a more detailed top view of the first embodiment of the present invention. It shows iron and magnets of the twin actuators **1**, the movable lens barrel **2**, having a lens **4** in the middle, two ball bearings **3**, and a carrier 5 of the camera module.

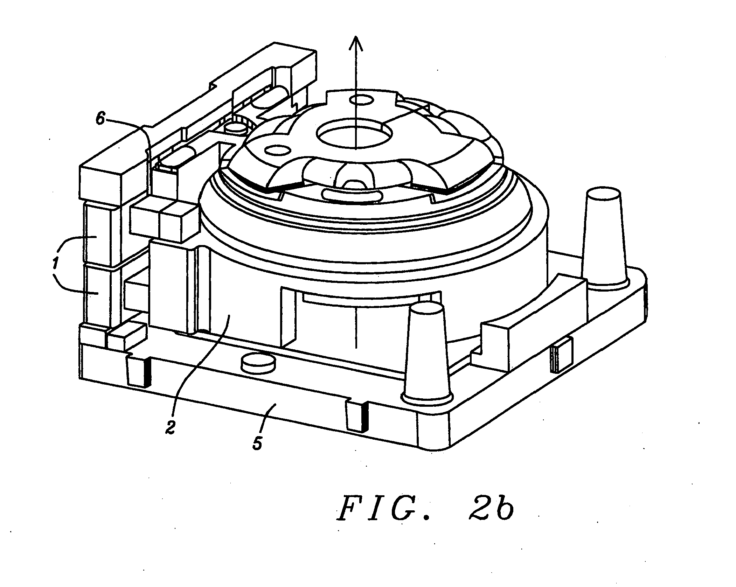

**Fig. 2b** shows a side view of the first embodiment of the present invention. It shows coils of one of the two actuators **1**, the lens barrel **2**, having a lens in the middle, one of two ball cages **6** of the ball bearings, and a carrier **5** of the camera module.

Bidirectional actuators, comprising coils wrapped around magnetic metal, preferably iron, and at least one permanent magnet are deployed to move the lens barrels shown in of **Figs. 1 a-b** and **Figs. 2 a-b.** ln a preferred embodiment two of such actuators are used to move the lens barrel and the permanent magnet is mounted on the lens barrel and the iron carrying the coils is mounted on the carrier.

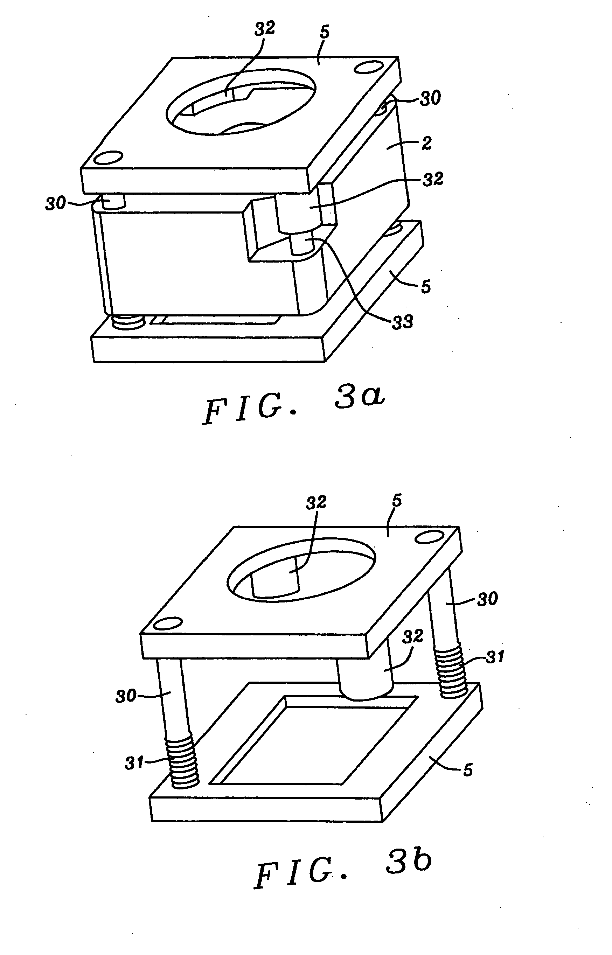

**Figs. 3a-c** show a second embodiment of the present invention. Guiding rods, diagonally located at two corners, guide the movable lens barrel. Two preferably identical actuators are located also diagonally at the other corners of the camera module. Adjusting springs can be applied to the guiding rods.

**Fig. 3a** shows an assembled camera module with a movable lens barrel **2**, fixed parts **5**, guiding rods **30**, being diagonally deployed, and two bidirectional actuators comprising coils **32**, which are firmly connected to fixed parts **5** of the camera module, and magnets **33**, which are firmly connected to the movable lens barrel **2**. The two actuators are also diagonally deployed. Depending upon the currents flowing through the coils **32**, the magnets **33** are moved inside the coils **32**. Each of the two guiding rods **30** and each of the two actuators are deployed in a separate corner of the camera module.

Fig. **3b** shows fixed parts **5** with diagonally located guiding rods **30**, springs **31** and diagonally deployed actuator coils **32**.

This second embodiment of the present invention is using guiding rods **30** instead of ball bearings as used in the first embodiment. It is relying on symmetrical forces to move the lens barrel. Thus a sliding contact bearing seems has been selected. The magnets for the actuators are centered inside the coils **32**. Therefore only longitudinal forces are generated by the actuators.

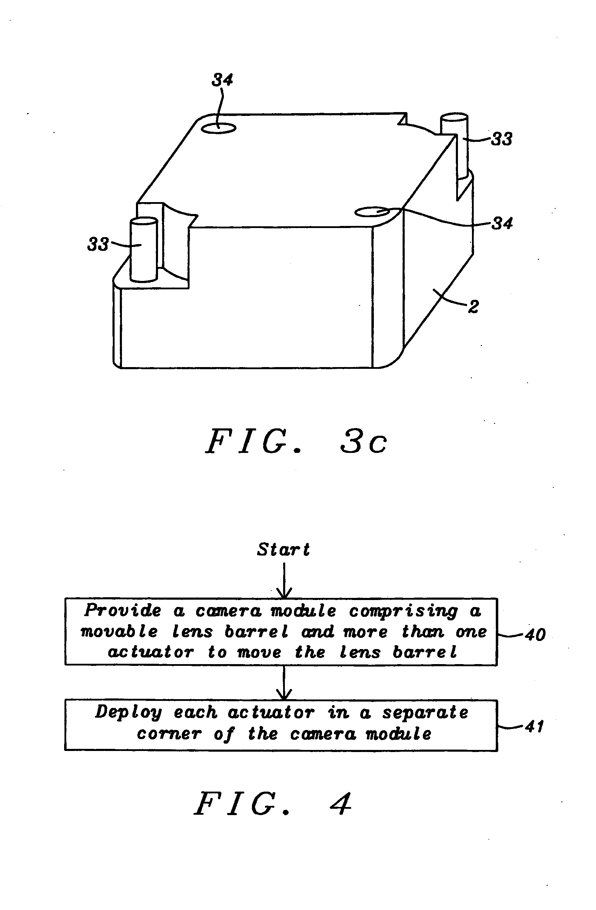

**Fig. 3c** shows the movable lens barrel **2** with magnets **33**, which can move inside the coils depending upon the currents through the coils. Via holes **34** are provided for the guiding rods **30** shown in **Fig. 3a**.

This configuration of the second embodiment of the present invention does not have a ball bearing system as disclosed with the first embodiment. lnstead it is relying on symmetrical forces by diagonally deployed actuators having a magnet moving inside of coils. Thus a sliding contact bearing seems more appropriate. The magnets are centered inside the coils. So no forces except for longitudinal ones appear from the motors.

ln both embodiments the twin-actuator deployment in corners of the camera module allows optimal use of the available space of the rectangular camera module having a round lens. Placing the actuators in the corners of the camera module allows furthermore a maximum lens diameter with the minimal outside dimension of the camera module.

Compared to existing solutions with a coil wrapped round the lens and a magnet ring round the whole lens the present invention yields smaller outside dimensions.

**Fig. 4** illustrates a flowchart of a method invented for camera modules having a movable lens barrel, allowing a maximum lens diameter with minimal outside dimensions. A first step **40** describes the provision of a camera module comprising a movable lens barrel and more than one actuator to move the lens barrel. The next step **41** illustrates deploying each actuator in a separate corner of the camera module.

As outlined above the actuators could be deployed in a first embodiment on a same side of the camera module or be deployed diagonally as described in the second embodiment.

Furthermore it should be noted that other configurations than disclosed in the two embodiments outlined above are possible as long as more than one actuator are deployed in the corners of the camera module. Possible alternatives are e.g. to use ball bearings together with the diagonally deployed actuators or to use guiding rods with the first embodiment, having the actuators both on a same side.

The camera module invented furthermore comprises an integrated circuit (lC) controlling the actuators of the present invention, an image sensor, and a shutter which also can be used as an aperture. This lC also controls one or more motors with integrated position control to move shutter blades of the camera module.

While the invention has been particularly shown and described with reference to the preferred embodiments thereof, it will be understood by those skilled in the art that various changes in form and details may be made without departing from the spirit and scope of the invention.

## Claims

1. A method for camera modules having a movable lens barrel allowing a maximum lens diameter with minimal outside dimensions, comprising the following steps:
(1) providing a camera module comprising a movable lens barrel and at least two actuators to move the lens barrel; and
(2) deploying each actuator in a separate corner of the camera module.

2. The method of claim 1 wherein two actuators are deployed in corners of a same side of the camera module.

3. The method of claim 2 wherein ball bearings are used to guide the lens barrel.

4. The method of claim 3 wherein said ball bearings are deployed between both actuators.

5. The method of claim 1 wherein two actuators are deployed in diagonal corners of the camera module..

6. The method of claim 5 wherein guiding rods are deployed used in other diagonal corners of the camera module.

7. The method of claim 5 wherein each of said actuators are comprising coils and a magnet, wherein the magnet is moving inside of the coils.

8. The method of claim 7 wherein said coils are firmly connected with a fixed part of the camera module and the magnet is firmly connected to the movable lens barrel.

9. The method of claim 1 wherein guiding rods are used to guide the lens barrel.

10. A camera module having a movable lens barrel, allowing a maximum lens diameter with minimal outside dimensions, comprises:
an image sensor;
a shutter with an aperture function driven by a linear motor;
said motor driving the shutter, wherein the motor has an integrated position sensing system;
a movable lens barrel;
at least two actuators to move said lens barrel, wherein each actuator is deployed in a separate corner of the camera module;
an integrated circuit controlling the motor driving the shutter and the actuators moving the lens barrel; and
a means to guide the movements of the lens barrel.

11. A camera module having a movable lens barrel, allowing a maximum lens diameter with minimal outside dimensions, comprises:
a movable lens barrel;
at least two actuators to move said lens barrel, wherein each actuator is deployed in a separate corner of the camera module; and
a means to guide the movements of the lens barrel.

12. The camera module of claim 11 wherein said means to guide the movements of the lens barrel are ball bearings.

13. The camera module of claim 11 wherein said means to guide the movements of the lens barrel are guiding rods.

14. The camera module of claim 11 wherein two actuators are deployed in corners of a same side of the camera module.

15. The camera module of claim 14 wherein ball bearings are deployed between both actuators.

16. The camera module of claim 11 wherein two actuators are diagonally deployed in corners of the camera module.

17. The camera module of claim 16 wherein guiding rods are diagonally deployed in other corners of the camera module.

18. The camera module of claim 16 wherein each of said actuators are comprising coils and a magnet, wherein the magnet is moving inside of the coils.

19. The camera module of claim 18 wherein said coils are firmly connected with a fixed part of the camera module and the magnet is firmly connected to the movable lens barrel.

20. The camera module of claim 11 wherein springs are deployed at the ends of said guiding rods.
